# EUROPEAN PATENT APPLICATION

(11) **EP 2 581 556 A2**
(43) Date of publication of application: **17.04.2013**
(21) Application number: 12188237.7
(22) Date of filing: 11.10.2012
(51) Int. Cl.: F01D 5/14, F01D 5/26

(54) **Variable vanes with non uniform lean**

(30) Priority: 12.10.2011 US 201113271617
(71) Applicant: General Electric Company, Schenectady, NY 12345 (US)
(72) Inventor: Mackay, Raymond Angus, Peabody, MA Massachusetts 01960-3474 (US); Manwaring, Steven Roy, Lebanon, OH Ohio 45036 (US)
(74) Representative: Williams, Andrew Richard

(57) **Abstract**

Non-uniform variable stator vanes (15) for a single stage of a gas turbine engine stage include non-uniform airfoils (31) with a non-uniformity between airfoils (31) of first and second portions (62, 64) of the stator vanes (15). The variable stator vanes (15) may further include all outer buttons (32), from which the airfoils (31) inwardly extend, in all of the variable stator vanes (15) being equally sized and shaped and the same all inner buttons (33) if used. The airfoils (31) in the first and second portions (62, 64) may be counter-clockwise and clockwise biased respectively with respect to a nominal airfoil position (66). The airfoils (31) in the first and second portions (62, 64) may be counter-clockwise and clockwise leaned respectively with respect to the nominal airfoil position (66). Outer ends (72) of the airfoils (31) in the first and second portions (62, 64) may be counter-clockwise and clockwise shifted respectively with respect to the nominal airfoil position (66).

## Description

### BACKGROUND OF THE INVENTION

### TECHNICAL FIELD

This invention relates to aircraft gas turbine engines and, particularly, to variable stator vanes.

### BACKGROUND INFORMATION

Variable stator vanes (VSVs) are commonly used in aircraft gas turbine engine compressors and fans and in some turbine designs. Non-rotating or stationary stator vanes typically are placed downstream or upstream of rotor blades of the fans, compressors, and turbines. These vanes reduce the tangential flow component leaving the rotors, thereby, increasing the static pressure of the fluid and setting the flow angle to a level appropriate for the downstream rotor.

Airfoils in variable and non-variable vanes have a series of natural frequencies associated with them. More specifically, each airfoil produces a wake in an air stream that is felt as a pulse by a passing airfoil. The combination of the number of stator vanes and the rotational speed of the compressor may coincide with a natural frequency of the rotor blades. The combination of the number of stator vane wakes (pulses) and the rotational speed of the compressor creates a stimulus that may coincide with a natural frequency of the rotor blades. It is highly desirable to keep the majority of the airfoil natural frequencies outside of the designed engine operating range.

Non-uniform vane spacing (NUVS) designs have been developed to reduce induced rotor blade vibrations. NUVS designs vary the vane spacing around the circumference of the engine casing to facilitate avoidance of rotor blade and stator vane natural frequencies or to reduce the amplitude of rotor blade resonant response at these frequencies. More specifically, within such designs the number of stator vanes is varied in one or more sectors of the stator vane assembly. Although the stator vane spacing may vary from one sector to the next, the stator vanes within each sector remain equally spaced relative to each other, and/or are designed with an equal pitch. The variation in vane spacing or pitch between stator vane sectors facilitates changing the frequency of the vane wakes to reduce the vibration response induced in adjacent rotor blades.

Due to the large range of operating conditions experienced by an axial flow compressor over a typical operating cycle, flow rates and rotational speeds of the compressor also vary widely. This results in large shifts in the absolute flow angle entering the stator vanes. To allow the vanes to accommodate these shifts in flow angle without encountering high loss or flow separation, circumferential rows of variable stator vanes are constructed so that the vanes can be rotated about their radial (or approximately radial) axis.

Generally, variable stator vanes (VSVs) have spindles through their rotational axis that penetrate the casing, allowing the vanes to be rotated using an actuation mechanism. At the flowpath, there is typically radially inner and outer buttons of material around the spindle which rotates along with the vane. Because there is a large pressure gradient between the pressure and suction sides of the vane, leakage flow is driven across this gap, resulting in reduced fluid turning and higher loss at the endwalls. This leakage flow also causes flow non-uniformities (i.e. wakes) at the adjacent rotor blades, which may excite these blades causing potentially damaging vibrations in the rotor blades. Conventional VSV buttons typically have diameters equal to or slightly less than the pitchwise spacing between vanes at their respective locations.

It is particularly difficult to implement NUVS designs for VSVs of existing engine lines or families because of the associated hardware and casing designs that include equiangularly spaced holes in the casings for the buttons. It is near impossible to retrofit with NUVS designs for VSVs incorporating different sector spacing of different spacing between upper and lower sets of VSVs. Thus, it is highly desirable to provide a VSV with NUVS having has equidistant or equiangular spacing between the radially inner buttons and between the radially outer buttons and between the spindles around the casing.

### BRIEF DESCRIPTION OF THE INVENTION

A plurality of same stage variable stator vanes includes non-uniform same stage variable stator vanes having non-uniform airfoils with at least first and second portions of the plurality of non-uniform same stage variable stator vanes. Each of the variable stator vanes includes a rotational axis. Each of the airfoils extends inwardly from an outer button centered about a rotational axis. Each of the airfoils may be cantilevered from and extend inwardly from the outer button or each of the airfoils may be disposed between spaced apart outer and inner buttons. An outer spindle extends outwardly from the outer button and for the embodiment of the variable stator vane with both outer and inner buttons an inner spindle extends inwardly from the inner button. The non-uniform same stage variable stator vanes have a non-uniformity between airfoils of the variable stator vanes of the first portions and airfoils of the variable stator vanes of the second portion.

All of the outer buttons in all of the variable stator vanes may be equally sized and shaped and if used all of the inner buttons in all of the variable stator vanes may be equally sized and shaped.

The non-uniformity may include the airfoils in the first portion of the plurality of variable stator vanes being counter-clockwise biased with respect to a nominal airfoil position and the airfoils in the second portion of the plurality of variable stator vanes being clockwise biased with respect to the nominal airfoil position.

The non-uniformity may include the airfoils in the first portion of the plurality of variable stator vanes being counter-clockwise leaned with respect to a nominal airfoil position and the airfoils in the second portion of the plurality of variable stator vanes being clockwise leaned with respect to the nominal airfoil position. The airfoils in the first and second portions may be counter-clockwise and clockwise leaned about inner ends of the airfoils respectively and each of the inner ends equally positioned with respect to the rotational axis of each respective vane.

The airfoils may extend between airfoil outer and inner ends of the airfoils with the non-uniformity including the outer ends of the airfoils in the first portion of the plurality of variable stator vanes being counter-clockwise shifted with respect to a nominal airfoil position and the outer ends of the airfoils in the second portion of the plurality of variable stator vanes being clockwise shifted with respect to the nominal airfoil position.

A gas turbine engine assembly includes a gas turbine engine casing radially outwardly supporting a variable vane assembly including at least one circular row of non-uniform same stage variable stator vanes having non-uniform airfoils. Each of the airfoils is disposed between spaced apart outer and inner buttons centered about a rotational axis of each of the variable stator vanes and each of the variable stator vanes includes an outer spindle extending outwardly from the outer button and an inner spindle extending inwardly from the inner button. The outer spindles are rotatably disposed through outer trunnions mounted in outer opening in the casing. At least first and second portions of the plurality of same stage variable stator vanes include a non-uniformity between airfoils of the variable stator vanes of the first portions and airfoils of the variable stator vanes of the second portion. All of the outer buttons in all of the variable stator vanes may be equally sized and shaped and all of the inner buttons in all of the variable stator vanes being equally sized and shaped and the outer opening equiangularly spaced around the casing.

The gas turbine engine casing may be the same or have the same design as a previously manufactured gas turbine engine or a family of gas turbine engines with uniform same stage variable stator vanes having uniform airfoils.

A method for manufacturing a gas turbine engine assembly provides a gas turbine engine casing radially outwardly supporting a variable vane assembly including at least one circular row of non-uniform same stage variable stator vanes. The method includes providing counter-clockwise biased airfoils in a first one of upper and lower sectors of a single stage of non-uniform same stage variable stator vanes and clockwise biased airfoils in a second one of the upper and lower sectors of the single stage of non-uniform same stage variable stator vanes. The method further includes manufacturing the vanes with the counter-clockwise biased and the clockwise biased airfoils disposed between spaced apart outer and inner buttons centered about rotational axis of each of the variable stator vanes and manufacturing the vanes with each of the variable stator vanes including an outer spindle extending outwardly from the outer button and an inner spindle extending inwardly from the inner button. The method further provides assembling the outer spindles rotatably disposed through outer trunnions mounted in outer opening in a casing. The method may include the gas turbine engine casing having the same or the same design as a previously manufactured gas turbine engine or a family of gas turbine engines with uniform same stage variable stator vanes having uniform airfoils.

### BRIEF DESCRIPTION OF THE DRAWINGS

FIG. 1 is a sectional view illustration of a portion of a gas turbine engine high pressure compressor having variable stator vanes with non-uniform vane spacing (NUVS).

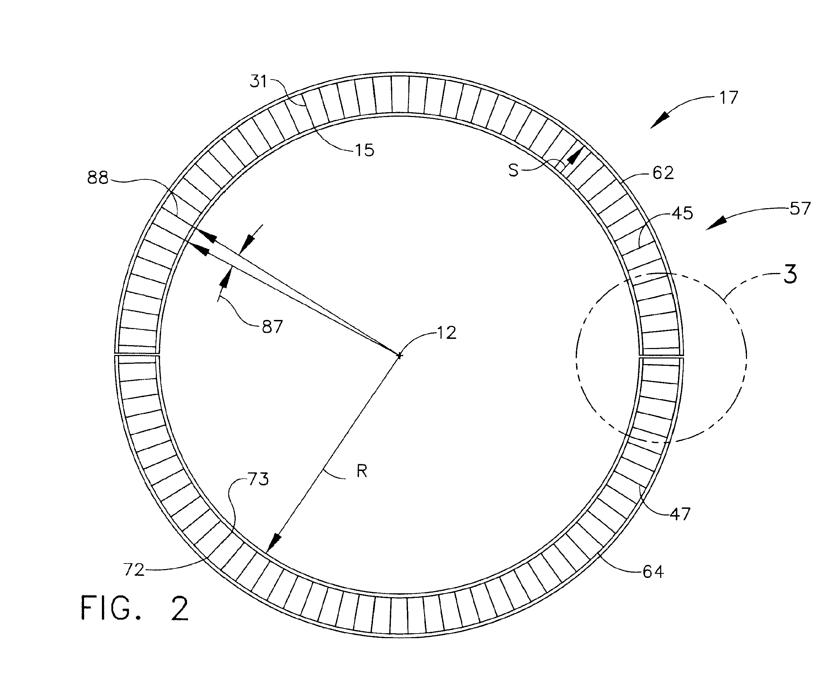

FIG. 2 is a diagrammatical view illustration of a high pressure compressor stage with the variable stator vanes with non-uniform vane spacing (NUVS) in the high pressure compressor illustrated in FIG. 1.
FIG. 3 is an enlarged diagrammatical view illustration of clockwise and counter-clockwise leaned airfoils of the variable stator vanes illustrated in FIG. 2.
FIG. 4 is a perspective view illustration of a clockwise leaned airfoil illustrated in FIG. 3.
FIG. 5 is a perspective view illustration of a counter-clockwise leaned airfoil illustrated in FIG. 3.
FIG. 6 is a perspective view illustration of two halves of a gas turbine engine split compressor casing with outer trunnion holes to accommodate trunnions of the variable stator vanes illustrated in FIG. 1.
FIG. 7 is an enlarged diagrammatical view illustration of an alternative arrangement of clockwise and counter-clockwise leaned airfoils of the variable stator vanes illustrated in FIG. 3 having circumferentially alternating clockwise and counter-clockwise leaned airfoils.
FIG. 8 is a perspective view illustration of a variable stator vane with a cantilevered clockwise leaned airfoil.
FIG. 9 is a perspective view illustration of a variable stator vane with a cantilevered counter-clockwise leaned airfoil.

### DETAILED DESCRIPTION OF THE INVENTION

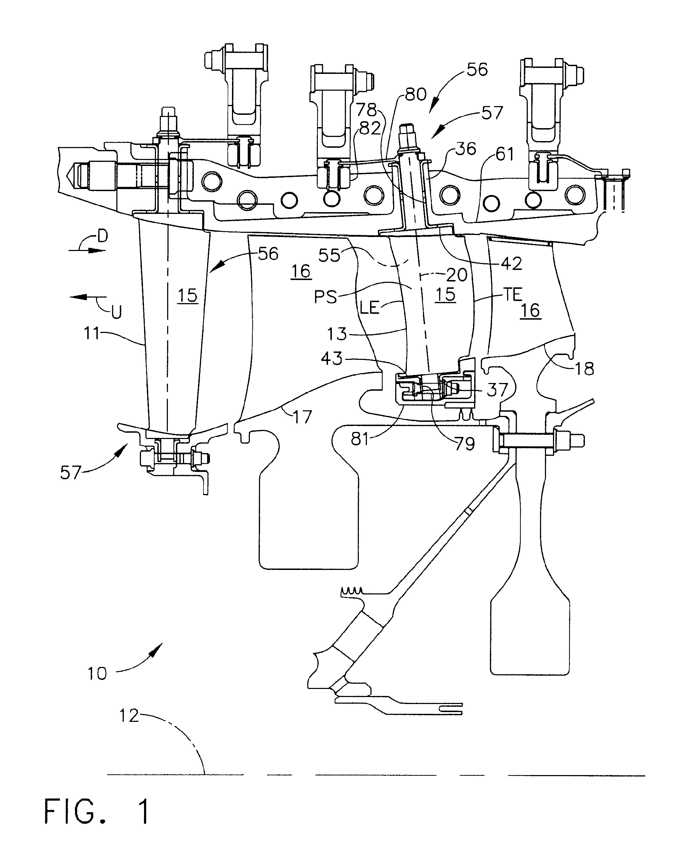

Illustrated in FIG. 1 is a portion of an exemplary turbofan gas turbine engine high pressure compressor 10 which is axisymmetrical about a longitudinal or axial centerline axis 12. Circular first and second rows 11, 13 of variable stator vanes 15 with non-uniform vane spacing (NUVS) are disposed in the compressor 10 and used to optimize the direction at which gases flowing downstream D through the compressor 10 enter first and second rows 17, 18 of rotatable blades 16. Though the exemplary embodiment of the variable stator vanes 15 with non-uniform vane spacing disclosed herein is for a high pressure compressor, these VSV's may be used in other compressor sections and in fan and turbine sections of a gas turbine engine as well. A compressor casing 61 radially outwardly supports variable stator vane assemblies 56 which include the variable stator vanes 15. The non-uniform variable stator vanes 15 illustrated herein have non-uniform airfoils 31.

Referring to FIGS. 1, 4, and 5, each variable stator vane assembly 56 includes a plurality of variable stator vanes 15. Each variable stator vane 15 is pivotable or rotatable about a rotational axis 20. Each variable stator vane 15 has an airfoil 31 disposed between spaced apart outer and inner buttons 32, 33. The airfoil 31 extends inwardly from an airfoil outer end 72 to an airfoil inner end 73 along a span S of the airfoil. The airfoil outer and inner ends 72, 73 are mounted on the outer and inner buttons 32, 33 respectively. An outer spindle 34 extends outwardly from the outer button 32 and an inner spindle 35 extends inwardly from the inner button 33. The outer and inner spindles 34, 35 are rotatably supported in outer and inner trunnions 36, 37 and centered and rotatable about the rotational axis 20.

The outer spindle 34 is rotatably disposed through the outer trunnion 36 which, in turn, is mounted in an outer opening 78 in the casing 61. The outer openings 78 illustrated herein are equiangularly circumferentially spaced around the casing 61 at a constant radius about the axial centerline axis 12. The inner spindle 35 is rotatably disposed through the inner trunnion 37 which, in turn, is mounted in an inner opening 79 in an inner ring 81 which is spaced radially inwardly of the casing 61. A lever arm 80 extends from the outer spindle 34 and is linked to an actuation ring 82 for rotating or pivoting and setting the flow angle of the variable stator vanes 15.

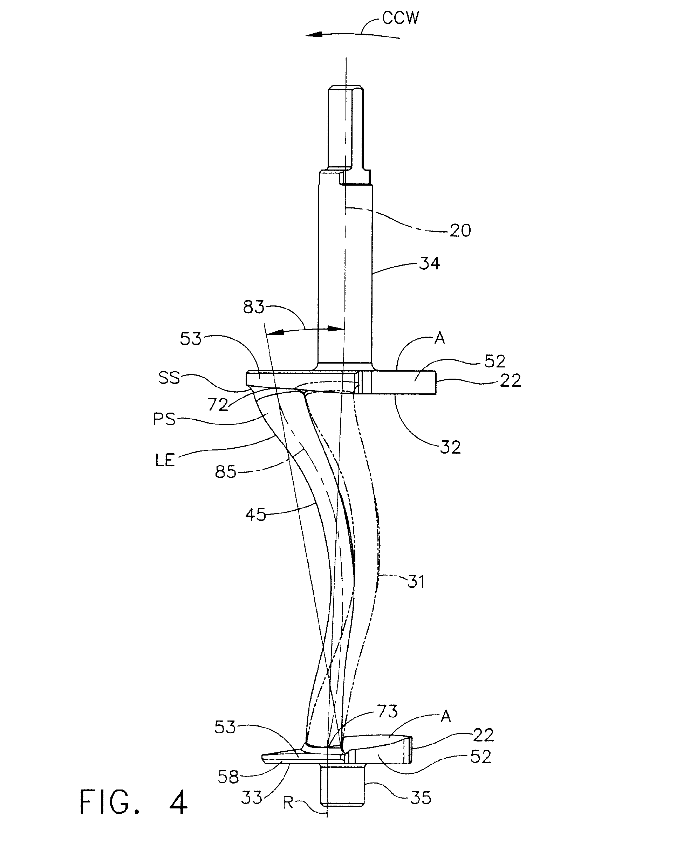

The outer and inner buttons 32, 33 are rotatably disposed in outer and inner circular recesses 42, 43 in the casing 61 and the inner ring 81 respectively. Each airfoil 31 has an airfoil leading edge LE upstream U of an airfoil trailing edges TE and pressure and suction sides PS, SS. Referring to FIGS. 4-5, the outer and inner buttons 32, 33 each have substantially circular edges 52 with a flat spot 53.

Each of the circular edges 52 of outer and inner buttons 32, 33 define a circular perimeter 22 within which each button rotates about the rotational axis 20. The circular perimeter 22 is circumscribed about the rotational axis 20 at the button radius RB from the rotational axis 20. A recess 58 is cut out or recessed in from the perimeter 22. The recesses 58 are designed to maximize the area A of the button while accommodating a large turning angle (not shown) of the variable stator vanes 15.

In order to reduce induced rotor blade vibration amplitudes, at least one of the variable stator vane assemblies 56 is a non-uniform variable stator vane assembly 57. The non-uniform variable stator vane assembly 57 includes different vanes in variable stator vane first and second or upper and lower sectors 62, 64 to facilitate avoidance of rotor blade and stator vane natural frequencies or to reduce the amplitude of rotor blade resonant response at these frequencies. The non-uniformity between the variable stator vanes 15 in the upper and lower sectors 62, 64 facilitates changing the frequency of the vane wakes to reduce the vibration response induced in adjacent rotor blades.

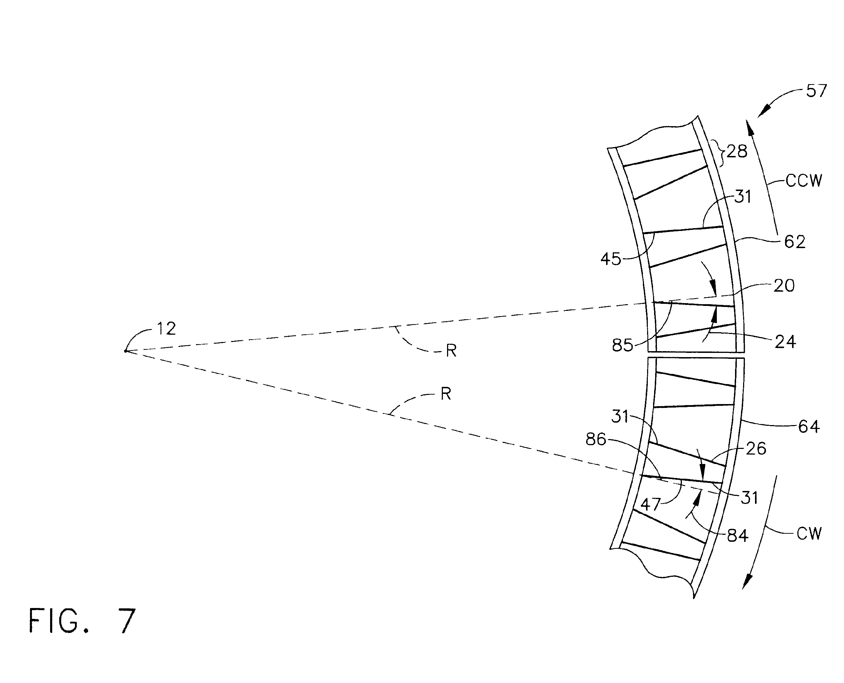

The non-uniformity between the variable stator vanes 15 in the upper and lower sectors 62, 64 disclosed herein is different upper and lower leans of the airfoils 31 of the variable stator vanes 15 in the upper and lower sectors 62, 64 respectively. The airfoils 31 in one of the upper and lower sectors 62, 64 are leaned circumferentially more in the clockwise direction CW and airfoils 31 in another of the upper and lower sectors 62, 64 are leaned circumferentially more in the counter-clockwise direction CCW. All the airfoils 31 may still be leaned in either the clockwise or the counter-clockwise directions they are just biased more in one or the other circumferential directions. Though two sectors of 180 degrees each are illustrated herein, more sectors may be used and so may more airfoil lean angles. Within each of the upper and lower sectors 62, 64, the variable stator vanes 15 are substantially identical and uniform and, more particularly, uniformally circumferentially leaned. One embodiment of the number of sectors includes only one vane in each sector and each pair 28 of adjacent vanes has two different airfoil lean angles illustrated as clockwise and counter-clockwise airfoil lean angles 24, 26 as illustrated in FIG. 7.

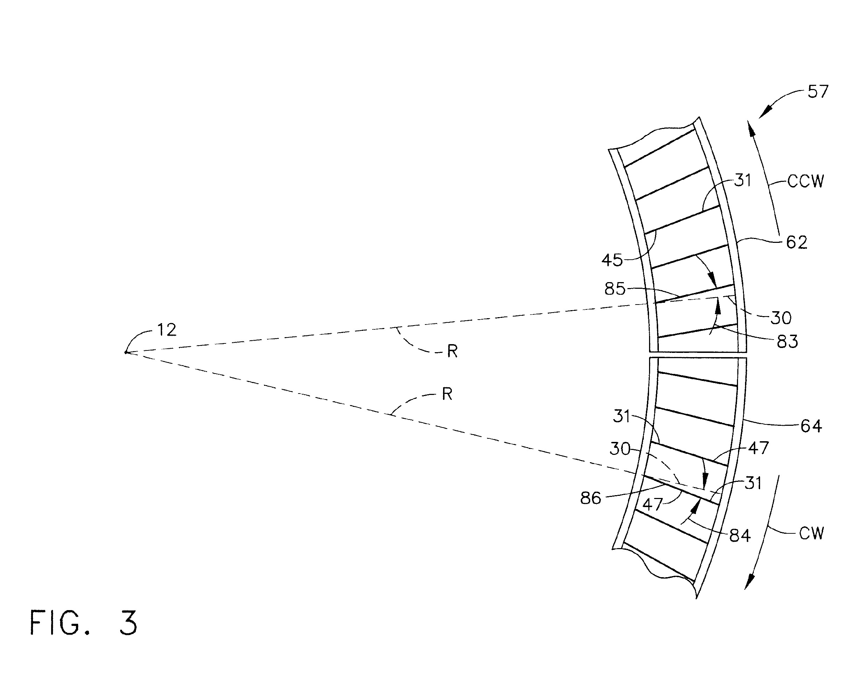

One exemplary embodiment of the non-uniform variable stator vane assembly 57 illustrated herein includes different upper and lower airfoil lean angles 83, 84 of the airfoils 31 of the variable stator vanes 15 in the upper and lower sectors 62, 64 respectively as illustrated in FIG. 3. For purpose of illustration, the airfoils 31 of the variable stator vanes 15 in the upper and lower sectors 62, 64 are leaned in the counter-clockwise and clockwise directions CC, CCW at the upper and lower airfoil lean angles 83, 84 respectively as illustrated in FIG. 3. The airfoils 31 in the upper and lower sectors 62, 64 are leaned in the counter-clockwise and clockwise directions CC, CCW with respect to a nominal airfoil lean angle 88 which may be 0 degrees or another angle. By way of example only, the lean angles may be about 17% of an acute angle 87 between the airfoil outer ends 72 of adjacent airfoils 31 as measured along engine radii R extending radially outwardly from the engine axial centerline axis 12 to the airfoil outer ends 72 on the outer buttons 32.

Referring to FIGS. 3-5, the upper and lower airfoil lean angles 83, 84 of the airfoil 31 may be defined by upper and lower stacking axes illustrated by upper and lower stacking axes 85, 86 of the airfoils 31 in the upper and lower sectors 62, 64 respectively. A linear stacking axis may be described as a line connecting airfoil cross section center of gravities (CGs) at the airfoil outer and inner ends 72, 73 of an unleaned nominal airfoil 30 and counter-clockwise and clockwise shifted or leaned airfoils 45, 47 (FIGS. 3-5) at the outer and inner buttons 32, 33 respectively of the vanes. Lean is a rotation of the airfoil 31 about the inner end 73 of the airfoil 31 causing the stacking axis to diverge from the engine radius R measured from the engine axial centerline axis 12.

A bowed or arcuate stacking axis may be defined by the center of gravities of the several radial sections of each airfoil, or in any other conventional manner such as, by the stacking of the midchord points thereof. Stacking axis has also been defined as representing a locus of center of gravities of transverse sections of an airfoil portion of the blade and may be linear or non-linear.

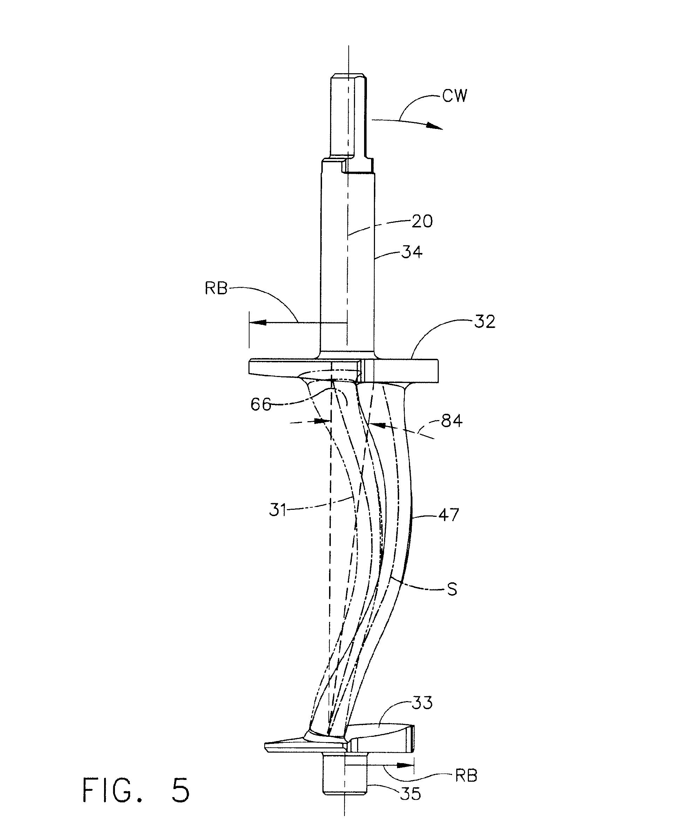

Another means for providing non-uniformity between the variable stator vanes 15 in the upper and lower sectors 62, 64 is illustrated in FIGS. 4 and 5. The means includes shifting the airfoil outer ends 72 from a nominal airfoil position 66 illustrated in dashed line to counter-clockwise and clockwise positions illustrated in solid line in the different sectors as illustrated in FIGS. 4 and 5 respectively. A nominal airfoil 31 is illustrated in dashed line counter in FIGS. 4 and 5 and counter-clockwise and clockwise shifted or leaned airfoils 45, 47 are illustrated in FIGS. 4 and 5 respectively. The inner ends 73 of the counter-clockwise and clockwise shifted or leaned airfoils 45, 47 remain the same as the inner end 73 of the nominal airfoil 31. Counter-clockwise and clockwise biased airfoils 45, 47 is a broader description of the non-uniformity. The nominal airfoil position 66 illustrated herein is between the counter-clockwise and clockwise biased airfoils 45, 47.

All the variable stator vanes 15 in the upper sector 62 may be identical and all the variable stator vanes 15 in the lower sector 64 may be identical wherein the difference between the two sets of the variable stator vanes 15 is the counter-clockwise and clockwise biased airfoils 45,47.

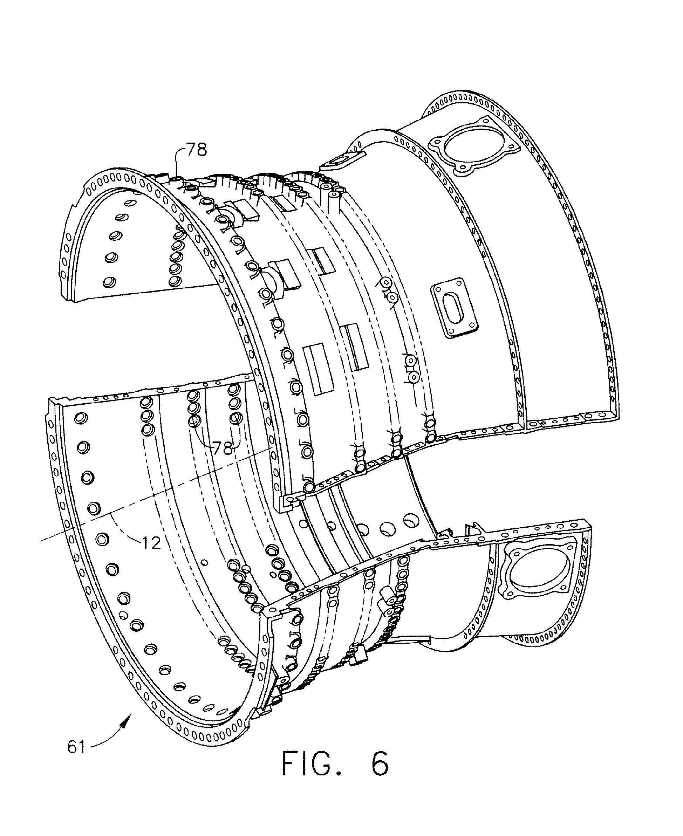

The shifting or leaning of the airfoils or other non-uniformity between the variable stator vanes 15 in the upper and lower sectors 62, 64 may thus be provided without changing the location size or shape of the outer and inner buttons 32, 33, the outer spindle and inner spindles 34, 35, the outer and inner trunnions 36, 37, and the outer openings 78 in the casing 61 illustrated in FIG. 6. The span S of the airfoils defines a radial distance between the outer and inner buttons 32, 33 of the variable stator vanes 15 and may also all be the same. Thus, the non-uniformity between the variable stator vanes 15 in different sectors (two or more) can be easily designed and manufactured for existing cases and engines with a minimal change.

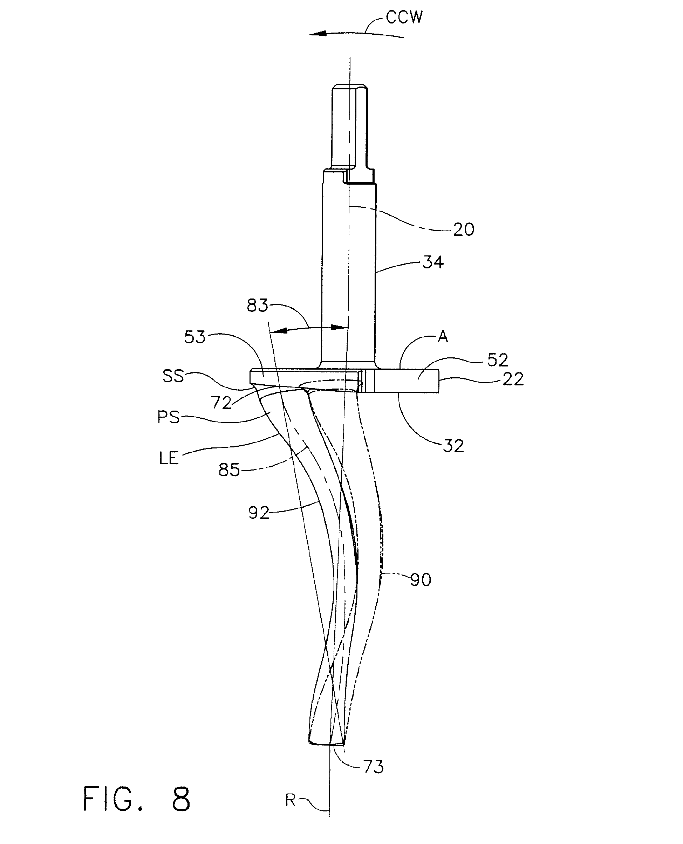

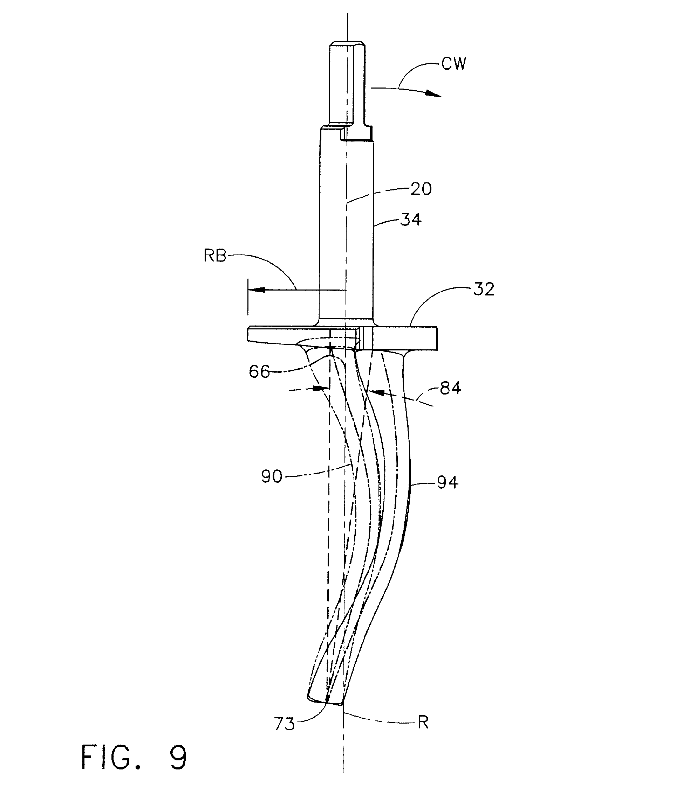

Illustrated in FIGS. 8 and 9 are variable stator vanes 15 having cantilevered airfoils 90 cantilevered from and extending radially inwardly or downwardly from outer buttons 32 and having no inner buttons. Each cantilevered airfoil 90 extends inwardly from an airfoil outer end 72 to an airfoil inner end 73 along a span S of the airfoil and the inner end 73 is a free end. The airfoil outer end 72 is mounted on the outer button 32. An outer spindle 34 extends outwardly from the outer button 32. The outer spindle 34 is rotatably supported in an outer trunnion 36 and centered and rotatable about the rotational axis 20.

The cantilevered airfoils 90 may be defined by upper and lower stacking axes illustrated by upper and lower stacking axes 85, 86 of the airfoils 31 in the upper and lower sectors 62, 64 respectively. A linear stacking axis may be described as a line connecting airfoil cross section center of gravities (CGs) at the airfoil outer and inner ends 72, 73 of an unleaned nominal cantilevered airfoil 90 and counter-clockwise and clockwise shifted or leaned cantilevered airfoils 92, 94 (FIGS. 8-9). Lean is a rotation of the unleaned cantilevered airfoils 90 about the inner end 73 causing the stacking axis to diverge from the engine radius R measured from the engine axial centerline axis 12.

While there have been described herein what are considered to be preferred and exemplary embodiments of the present invention, other modifications of the invention shall be apparent to those skilled in the art from the teachings herein and, it is therefore, desired to be secured in the appended claims all such modifications as fall within the true spirit and scope of the invention.

Various aspects and embodiments of the present invention are defined by the following numbered clauses:
1. A plurality of same stage variable stator vanes comprising:
   non-uniform same stage variable stator vanes having non-uniform airfoils;
   at least first and second portions of the plurality of non-uniform same stage variable stator vanes;
   each of the variable stator vanes having a rotational axis;
   each of the airfoils extending inwardly from an outer button centered about a rotational axis; and
   a non-uniformity between airfoils of the variable stator vanes of the first portions and airfoils of the variable stator vanes of the second portion.
2. The plurality of same stage variable stator vanes as claimed in clause 1 further comprising all of the outer buttons in all of the variable stator vanes being equally sized and shaped.
3. The plurality of same stage variable stator vanes as claimed in clause 1 wherein the non-uniformity includes the airfoils in the first portion of the plurality of variable stator vanes being counter-clockwise biased with respect to a nominal airfoil position and the airfoils in the second portion of the plurality of variable stator vanes being clockwise biased with respect to the nominal airfoil position.
4. The plurality of same stage variable stator vanes as claimed in clause 1 wherein the non-uniformity includes the airfoils in the first portion of the plurality of variable stator vanes being counter-clockwise leaned with respect to a nominal airfoil position and the airfoils in the second portion of the plurality of variable stator vanes being clockwise leaned with respect to the nominal airfoil position.
5. The plurality of same stage variable stator vanes as claimed in clause 4 wherein the airfoils in the first and second portions are counter-clockwise and clockwise leaned about inner ends of the airfoils respectively and each of the inner ends equally positioned with respect to the rotational axis of each respective vane.
6. The plurality of same stage variable stator vanes as claimed in clause 1 further comprising:
   the airfoils extending between airfoil outer and inner ends of the airfoils,
   the non-uniformity including the outer ends of the airfoils in the first portion of the plurality of variable stator vanes being counter-clockwise shifted with respect to a nominal airfoil position, and
   the outer ends of the airfoils in the second portion of the plurality of variable stator vanes being clockwise shifted with respect to the nominal airfoil position.
7. The plurality of same stage variable stator vanes as claimed in clause 1 further comprising each of the airfoils disposed between the outer button and a spaced apart inner button and an inner spindle extending inwardly from the inner button.
8. The plurality of same stage variable stator vanes as claimed in clause 7 further comprising all of the outer buttons in all of the variable stator vanes being equally sized and shaped and all of the inner buttons in all of the variable stator vanes being equally sized and shaped.
9. The plurality of same stage variable stator vanes as claimed in clause 7 wherein the non-uniformity includes the airfoils in the first portion of the plurality of variable stator vanes being counter-clockwise biased with respect to a nominal airfoil position and the airfoils in the second portion of the plurality of variable stator vanes being clockwise biased with respect to the nominal airfoil position.
10. The plurality of same stage variable stator vanes as claimed in clause 9 further comprising all of the outer buttons in all of the variable stator vanes being equally sized and shaped and all of the inner buttons in all of the variable stator vanes being equally sized and shaped.
11. The plurality of same stage variable stator vanes as claimed in clause 7 wherein the non-uniformity includes the airfoils in the first portion of the plurality of variable stator vanes being counter-clockwise leaned with respect to a nominal airfoil position and the airfoils in the second portion of the plurality of variable stator vanes being clockwise leaned with respect to the nominal airfoil position.
12. The plurality of same stage variable stator vanes as claimed in clause 11 wherein the airfoils in the first and second portions are counter-clockwise and clockwise leaned about inner ends of the airfoils respectively and each of the inner ends equally positioned with respect to the rotational axis of each respective vane.
13. The plurality of same stage variable stator vanes as claimed in clause 7 further comprising:
   the airfoils extending between airfoil outer and inner ends of the airfoils,
   the non-uniformity including the outer ends of the airfoils in the first portion of the plurality of variable stator vanes being counter-clockwise shifted with respect to a nominal airfoil position, and
   the outer ends of the airfoils in the second portion of the plurality of variable stator vanes being clockwise shifted with respect to the nominal airfoil position.
14. A gas turbine engine assembly comprising:
   a gas turbine engine casing radially outwardly supporting a variable vane assembly including at least one circular row of non-uniform same stage variable stator vanes having non-uniform airfoils;
   each of the variable stator vanes having a rotational axis;
   each of the airfoils extending inwardly from an outer button centered about a rotational axis;
   each of the variable stator vanes including an outer spindle extending outwardly from the outer button;
   the outer spindles rotatably disposed through outer trunnions mounted in outer openings in the casing;
   at least first and second portions of the plurality of same stage variable stator vanes;
      and
   a non-uniformity between airfoils of the variable stator vanes of the first portions and airfoils of the variable stator vanes of the second portion.
15. A gas turbine engine assembly as claimed in clause 14 further comprising all of the outer buttons in all of the variable stator vanes being equally sized and shaped and the outer openings being equiangularly spaced around the casing.
16. A gas turbine engine assembly as claimed in clause 14 wherein the non-uniformity includes the airfoils in the first portion of the plurality of variable stator vanes being counter-clockwise biased with respect to a nominal airfoil position and the airfoils in the second portion of the plurality of variable stator vanes being clockwise biased with respect to the nominal airfoil position.
17. A gas turbine engine assembly as claimed in clause 14 wherein the non-uniformity includes the airfoils in the first portion of the plurality of variable stator vanes being counter-clockwise leaned with respect to a nominal airfoil position and the airfoils in the second portion of the plurality of variable stator vanes being clockwise leaned with respect to the nominal airfoil position.
18. A gas turbine engine assembly as claimed in clause 17 wherein the airfoils in the first and second portions are counter-clockwise and clockwise leaned about inner ends of the airfoils respectively and each of the inner ends equally positioned with respect to the rotational axis of each respective vane.
19. A gas turbine engine assembly as claimed in clause 14 further comprising:
   the airfoils extending between airfoil outer and inner ends of the airfoils,
   the non-uniformity including the outer ends of the airfoils in the first portion of the plurality of variable stator vanes being counter-clockwise shifted with respect to a nominal airfoil position, and
   the outer ends of the airfoils in the second portion of the plurality of variable stator vanes being clockwise shifted with respect to the nominal airfoil position.
20. A gas turbine engine assembly as claimed in clause 14 wherein the gas turbine engine casing is the same or has the same design as a previously manufactured gas turbine engine or a family of gas turbine engines with uniform same stage variable stator vanes having uniform airfoils.
21. A gas turbine engine assembly as claimed in clause 20 wherein the non-uniformity includes the airfoils in the first portion of the plurality of variable stator vanes being counter-clockwise biased with respect to a nominal airfoil position and the airfoils in the second portion of the plurality of variable stator vanes being clockwise biased with respect to the nominal airfoil position.
22. A gas turbine engine assembly as claimed in clause 20 wherein the non-uniformity includes the airfoils in the first portion of the plurality of variable stator vanes being counter-clockwise leaned with respect to a nominal airfoil position and the airfoils in the second portion of the plurality of variable stator vanes being clockwise leaned with respect to the nominal airfoil position.
23. A gas turbine engine assembly as claimed in clause 22 wherein the airfoils in the first and second portions are counter-clockwise and clockwise leaned about inner ends of the airfoils respectively and each of the inner ends equally positioned with respect to the rotational axis of each respective vane.
24. A gas turbine engine assembly as claimed in clause 23 further comprising:
   the airfoils extending between airfoil outer and inner ends of the airfoils,
   the non-uniformity including the outer ends of the airfoils in the first portion of the plurality of variable stator vanes being counter-clockwise shifted with respect to a nominal airfoil position, and
   the outer ends of the airfoils in the second portion of the plurality of variable stator vanes being clockwise shifted with respect to the nominal airfoil position.
25. A gas turbine engine assembly as claimed in clause 14 further comprising each of the airfoils disposed between the outer button and a spaced apart inner button and an inner spindle extending inwardly from the inner button.
26. A gas turbine engine assembly as claimed in clause 25 wherein the non-uniformity includes the airfoils in the first portion of the plurality of variable stator vanes being counter-clockwise biased with respect to a nominal airfoil position and the airfoils in the second portion of the plurality of variable stator vanes being clockwise biased with respect to the nominal airfoil position.
27. A gas turbine engine assembly as claimed in clause 25 further comprising all of the outer buttons in all of the variable stator vanes being equally sized and shaped and all of the inner buttons in all of the variable stator vanes being equally sized and shaped and the outer openings being equiangularly spaced around the casing.
28. A gas turbine engine assembly comprising:
   a gas turbine engine casing radially outwardly supporting a variable vane assembly including at least one circular row of non-uniform same stage variable stator vanes having non-uniform airfoils;
   each of the variable stator vanes having a rotational axis;
   each of the airfoils extending inwardly from an outer button centered about a rotational axis;
   each of the variable stator vanes including an outer spindle extending outwardly from the outer button;
   the outer spindles rotatably disposed through outer trunnions mounted in outer openings in the casing;
   first and second portions of the plurality of same stage variable stator vanes disposed in first and second 180 degree sectors respectively of the row of the variable stator vanes;
   the first and second portions of the vanes having equal numbers of the vanes; and
   a non-uniformity between airfoils of the variable stator vanes of the first portions and airfoils of the variable stator vanes of the second portion.
29. A gas turbine engine assembly as claimed in clause 28 further comprising all of the outer buttons in all of the variable stator vanes being equally sized and shaped and the outer openings being equiangularly spaced around the casing.
30. A gas turbine engine assembly as claimed in clause 28 wherein the non-uniformity includes the airfoils in the first portion of the plurality of variable stator vanes being counter-clockwise biased with respect to a nominal airfoil position and the airfoils in the second portion of the plurality of variable stator vanes being clockwise biased with respect to the nominal airfoil position.
31. A gas turbine engine assembly as claimed in clause 28 wherein the non-uniformity includes the airfoils in the first portion of the plurality of variable stator vanes being counter-clockwise leaned with respect to a nominal airfoil position and the airfoils in the second portion of the plurality of variable stator vanes being clockwise leaned with respect to the nominal airfoil position.
32. A gas turbine engine assembly as claimed in clause 31 wherein the airfoils in the first and second portions are counter-clockwise and clockwise leaned about inner ends of the airfoils respectively and each of the inner ends equally positioned with respect to the rotational axis of each respective vane.
33. A gas turbine engine assembly as claimed in clause 30 further comprising:
   the airfoils extending between airfoil outer and inner ends of the airfoils,
   the non-uniformity including the outer ends of the airfoils in the first portion of the plurality of variable stator vanes being counter-clockwise shifted with respect to a nominal airfoil position, and
   the outer ends of the airfoils in the second portion of the plurality of variable stator vanes being clockwise shifted with respect to the nominal airfoil position.
34. A gas turbine engine assembly as claimed in clause 39 wherein the gas turbine engine casing is the same or has the same design as a previously manufactured gas turbine engine or a family of gas turbine engines with uniform same stage variable stator vanes having uniform airfoils.
35. A method for manufacturing a gas turbine engine assembly a gas turbine engine casing radially outwardly supporting a variable vane assembly including at least one circular row of non-uniform same stage variable stator vanes, the method comprising:
   providing counter-clockwise biased airfoils in a first one of upper and lower sectors of a single stage of non-uniform same stage variable stator vanes and clockwise biased airfoils in a second one of the upper and lower sectors of the single stage of non-uniform same stage variable stator vanes;
   manufacturing the vanes with the counter-clockwise biased and the clockwise biased airfoils disposed between spaced apart outer and inner buttons centered about rotational axis of each of the variable stator vanes;
   manufacturing the vanes with each of the variable stator vanes including an outer spindle extending outwardly from the outer button and an inner spindle extending inwardly from the inner button; and
   assembling the outer spindles rotatably disposed through outer trunnions mounted in outer openings in a casing.
36. The method as claimed in clause 35 further comprising manufacturing the all the vanes with the outer buttons in all of the variable stator vanes being equally sized and shaped and all of the inner buttons in all of the variable stator vanes being equally sized and shaped.
37. The method as claimed in clause 36 wherein the gas turbine engine casing is the same or has the same design as a previously manufactured gas turbine engine or a family of gas turbine engines with uniform same stage variable stator vanes having uniform airfoils.

## Claims

1. A plurality of same stage variable stator vanes (15) comprising:
non-uniform same stage variable stator vanes (15) having non-uniform airfoils (31);
at least first and second portions (62, 64) of the plurality of non-uniform same stage variable stator vanes (15);
each of the variable stator vanes (15) having a rotational axis (20);
each of the airfoils (31) extending inwardly from an outer button (32) centered about a rotational axis (20); and
a non-uniformity between airfoils (31) of the variable stator vanes (15) of the first portions (62) and airfoils (31) of the variable stator vanes (15) of the second portion (64).

2. The plurality of same stage variable stator vanes (15) as claimed in claim 1, further comprising all of the outer buttons (32) in all of the variable stator vanes (15) being equally sized and shaped.

3. The plurality of same stage variable stator vanes (15) as claimed in either of claim 1 or 2, wherein the non-uniformity includes the airfoils (31) in the first portion (62) of the plurality of variable stator vanes (15) being counter-clockwise biased with respect to a nominal airfoil position (66) and the airfoils (31) in the second portion (64) of the plurality of variable stator vanes (15) being clockwise biased with respect to the nominal airfoil position (66).

4. The plurality of same stage variable stator vanes (15) as claimed in either of claim 1 or 2, wherein the non-uniformity includes the airfoils (31) in the first portion (62) of the plurality of variable stator vanes (15) being counter-clockwise leaned with respect to a nominal airfoil position (66) and the airfoils (31) in the second portion (64) of the plurality of variable stator vanes (15) being clockwise leaned with respect to the nominal airfoil position (66).

5. The plurality of same stage variable stator vanes (15) as claimed in claim 4, wherein the airfoils (31) in the first and second portions (62, 64) are counter-clockwise and clockwise leaned about inner ends (73) of the airfoils (31) respectively and each of the inner ends (73) is equally positioned with respect to the rotational axis (20) of each respective vane (15).

6. The plurality of same stage variable stator vanes (15) as claimed in either of claim 1 or 2, further comprising:
the airfoils (31) extending between airfoil outer and inner ends (72, 73) of the airfoils (31),
the non-uniformity including the outer ends (72) of the airfoils (31) in the first portion (62) of the plurality of variable stator vanes (15) being counter-clockwise shifted with respect to a nominal airfoil position (66), and
the outer ends (72) of the airfoils (31) in the second portion (64) of the plurality of variable stator vanes (15) being clockwise shifted with respect to the nominal airfoil position (66).

7. The plurality of same stage variable stator vanes (15) as claimed in any preceding claim, further comprising each of the airfoils (31) disposed between the outer button (32) and a spaced apart inner button (33) and an inner spindle (35) extending inwardly from the inner button (33).

8. A gas turbine engine assembly (10) comprising:
a gas turbine engine casing (61) radially outwardly supporting a variable vane assembly (56) including at least one circular row (13) of non-uniform same stage variable stator vanes (15) having non-uniform airfoils (31);
the at least one row of non-uniform same stage variable stator vanes being according to claim 1;
each of the variable stator vanes (15) including an outer spindle (34) extending outwardly from the outer button (32);
the outer spindles (34) rotatably disposed through outer trunnions (36) mounted in outer openings (78) in the casing (61).

9. A gas turbine engine assembly (10) as claimed in claim 8, wherein the gas turbine engine casing (61) is the same or has the same design as a previously manufactured gas turbine engine or a family of gas turbine engines with uniform same stage variable stator vanes (15) having uniform airfoils (31).

10. A gas turbine engine assembly (10) as claimed in claim 8, further comprising each of the airfoils (31) disposed between the outer button (32) and a spaced apart inner button (33) and an inner spindle (35) extending inwardly from the inner button (33).

11. A gas turbine engine assembly (10) as claimed in claim 10, further comprising all of the outer buttons (32) in all of the variable stator vanes (15) being equally sized and shaped and all of the inner buttons (33) in all of the variable stator vanes (15) being equally sized and shaped and the outer openings (78) being equiangularly spaced around the casing (61).

12. A method for manufacturing a gas turbine engine assembly (10) including a gas turbine engine casing (61) radially outwardly supporting a variable vane assembly (56) including at least one circular row (13) of non-uniform same stage variable stator vanes (15), the method comprising:
providing counter-clockwise biased airfoils (45) in a first one of upper and lower sectors (62, 64) of a single stage of non-uniform same stage variable stator vanes (15) and clockwise biased airfoils (47) in a second one of the upper and lower sectors (62, 64) of the single stage of non-uniform same stage variable stator vanes (15);
manufacturing the vanes (15) with the counter-clockwise biased and the clockwise biased airfoils (45, 47) disposed between spaced apart outer and inner buttons (32, 33) centered about a rotational axis (20) of each of the variable stator vanes (15);
manufacturing the vanes (15) with each of the variable stator vanes (15) including an outer spindle (34) extending outwardly from the outer button (32) and an inner spindle (35) extending inwardly from the inner button (33); and
assembling the outer spindles (34) rotatably disposed through outer trunnions (36) mounted in outer openings (78) in a casing (61).
